(19) Europäisches Patentamt
European Patent Office
Office européen des brevets

(11) **EP 2 503 720 B1**

## (12) EUROPEAN PATENT SPECIFICATION

(45) Date of publication and mention
of the grant of the patent:
**16.09.2015 Bulletin 2015/38**

(51) Int Cl.:
*H04J 13/00* *(2011.01)*      *H04B 3/32* *(2006.01)*

(21) Application number: **11305305.2**

(22) Date of filing: **18.03.2011**

(54) **Spiral-shaped interpolation of coupling coefficients**

Spiralförmige Interpolation von Kopplungskoeffizienten

Interpolation en forme de spirale de coefficients de couplage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.09.2012 Bulletin 2012/39**

(73) Proprietor: **ALCATEL LUCENT
92100 Boulogne-Billancourt (FR)**

(72) Inventor: **Van Bruyssel, Danny
2820 Bonheiden (BE)**

(74) Representative: **ALU Antw Patent Attorneys
Intellectual Property and Standards
Copernicuslaan 50
2018 Antwerp (BE)**

(56) References cited:
**EP-A1- 2 056 548        WO-A1-2010/075559
US-A1- 2009 116 582**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

The present invention relates to joint signal processing for crosstalk mitigation.

**Technical Background of the Invention**

crosstalk (or inter-channel interference) is a major source of channel impairment for Multiple Input Multiple Output (MIMO) communication systems, such as Digital Subscriber Line (DSL) communication systems.

As the demand for higher data rates increases, DSL systems are evolving toward higher frequency bands, wherein crosstalk between neighboring transmission lines (that is to say, transmission lines that are in close vicinity such as twisted copper pairs in a cable binder) is more pronounced (the higher frequency, the more coupling).

A MIMO system can be described by the following linear model:

$$\mathbf{Y}(f) = \mathbf{H}(f)\mathbf{X}(f) + \mathbf{Z}(f) \quad (1)$$

wherein the N-component complex vector X, respectively Y, denotes a discrete frequency representation of the symbols transmitted over, respectively received from, the N channels, wherein the NxN complex matrix H is referred to as the channel matrix: the (i,j)-th component of the channel matrix H describes how the communication system produces a signal on the i-th channel output in response to a symbol being transmitted to the j-th channel input; the diagonal elements of the channel matrix describe direct channel coupling, and the off-diagonal elements of the channel matrix describe inter-channel coupling (also referred to as crosstalk coefficients),

and wherein the N-component complex vector Z denotes additional noise present over the N channels, such as Radio Frequency Interference (RFI), thermal noise and alien interference.

Different strategies have been developed to mitigate crosstalk and to maximize effective throughput, reach and line stability. These techniques are gradually evolving from static or dynamic spectral management techniques to multi-user signal coordination (or vectoring).

One technique for reducing inter-channel interference is joint signal precoding: the transmit data symbols are jointly passed through a precoding matrix before being transmitted over the respective communication channels. The precoding matrix is such that the concatenation of the precoder and the communication channel results in little or no interference at the receiver. This is achieved by adding to the original signal an anti-phase signal that is the inverse of an estimate of the aggregate crosstalk signal.

A further technique for reducing inter-channel interference is joint signal post-processing: the received data symbols are jointly passed through a crosstalk cancellation matrix before being detected. The crosstalk cancellation matrix is such that the concatenation of the post-coder and the communication channel results in little or no interference at the receiver. This is achieved by subtracting from the received signal an estimate of the aggregate crosstalk signal.

Signal precoding is particularly suited for downstream communication (towards customer premises), while signal post-processing is particularly suited for upstream communication (from customer premises). Either technique is often referred to as signal vectoring.

Signal vectoring is typically performed at a traffic aggregation point, whereat all the data symbols that are to be concurrently transmitted and/or received are available. For instance, signal vectoring is advantageously performed within a Digital Subscriber Line Access Multiplexer (DSLAM).

The choice of the vectoring group, that is to say the set of communication lines, the signals of which are jointly processed, is rather critical for achieving good crosstalk cancellation performances. Within that group, each communication line is considered as a disturbing line inducing crosstalk into the other communication lines of the group, and the same communication line is considered as a victim line receiving crosstalk from the other communication lines of the group. Crosstalk from lines that do not belong to the vectoring group is treated as alien noise and is not canceled.

Ideally, the vectoring group should match the whole set of communication lines that physically and noticeably interact with each other. Yet, limited vectoring capabilities and/or specific network topologies may prevent such an exhaustive approach, in which case the vectoring group would include a subset only of all the physically interacting lines, thereby yielding limited crosstalk cancellation performances.

The performance of signal vectoring depends critically on the component values of the precoding or cancellation matrix, which component values are to be computed and updated according to the actual and varying crosstalk impairing the respective communication channels.

A prior art method for estimating the crosstalk coefficients comprises the steps of:

- simultaneously transmitting a plurality of mutually orthogonal crosstalk pilot sequences through respective ones of a plurality of disturber channels,
- measuring errors induced over a victim channel while the pilot sequences are being transmitted,
- correlating the error measurements with respective ones of the plurality of crosstalk pilot sequences, thereby yielding a plurality of correlated error measurements,
- estimating the crosstalk coefficients from the plurality of disturber channels into the victim channel based on respective ones of the plurality of correlated error measurements.

That is, transceiver units send downstream or upstream pilot sequences. Error samples, measuring both interference and noise over the victim channel, are fed back to a vectoring controller. The error samples are correlated with a given pilot sequence in order to obtain the crosstalk contribution from a specific line. To reject the crosstalk contribution from the other lines, the pilot sequences are made orthogonal, for instance by using Walsh-Hadamard sequences comprising '+1' and '-1' anti-phase symbols. The crosstalk estimates are used for updating the precoding or cancellation matrix. The process can be repeated as needed to obtain more and more accurate estimates.

This prior art method has been adopted by the International Telecommunication Union (ITU) for use with VDSL2 transceivers, and is described in the recommendation entitled "Self-FEXT Cancellation (vectoring) For Use with VDSL2 Transceivers", ref. G.993.5 (04/2010).

In this recommendation, the pilot signals are sent on the so-called SYNC symbols, which occur periodically after every 256 DATA symbols.

On a given disturber line, a representative subset of the active carriers (or tones) of the SYNC symbol are 4-QAM modulated by the same pilot digit from a given pilot sequence, and thus all transmit one of two complex constellation points, either '1 + j' corresponding to '+1', or '-1 - j' corresponding to '-1'. The remaining carriers of the SYNC symbol keeps on carrying the typical SYNC-FLAG for On-Line Reconfiguration (OLR) message acknowledgment.

On a given victim line, error samples, which comprise both the real and imaginary part of the frequency error on a per tone or group-of-tones basis quantized with a certain number of bits (typically 16), are measured and reported for a specific SYNC symbol to the vectoring controller for further crosstalk estimation.

In G.993.5, it is further assumed that the access node transmits and receives the SYNC symbols over the vectored lines synchronously (super frame alignment) so as pilot signal transmission and interference measurements are carried out simultaneously over the respective transmission lines.

A further prior art method for estimating the crosstalk coefficients comprises the steps of superimposing successive crosstalk probing signals over the disturber or victim line while measuring Signal to Noise and Interference Ratio (SNIR) over the victim line, and estimating the crosstalk coefficients from the SNIR measurements.

This alternative method is particularly suited for legacy Customer Premises Equipment (CPE), and is described in Appendix III of ITU G.993.5 recommendation.

A further technical challenge is to perform vectoring on many subscriber lines and on a large number of tones without using excessive amounts of memory.

Using a brute force approach, in a system with N lines, one would store an array of $N^2$ coefficients to represent the precoding or post-processing matrix to be used on a given tone. For a system operating on K tones, the required memory would amount to $N^2K$ coefficients.

For large systems, say with hundreds of lines and thousands of tones, the array is of a significant size. Large hardware costs are incurred to make a system which can store so many coefficients and access them rapidly.

In typical scenarios of interest, the matrices are inverse matrices of channel matrices. The channel matrices themselves are not independent from tone to tone - rather the channel matrix coefficients vary smoothly as a function of the frequency index. In such cases, the desired precoding or post-processing matrix also varies smoothly. This means there is redundancy, and an opportunity to represent the precoding or post-processing matrix with fewer coefficients.

One natural way to make a reduced representation is by interpolation. That is, one stores a relatively small number of coefficients, and then the rest are generated on the fly using interpolation. For example, one can use piecewise constant interpolation. In this approach, given a decimation factor D, one only stores $N^2K/D$ coefficients. The first coefficient matrix is used for the first D tones, then the second coefficient is used for the next D tones, and so on.

For higher accuracy when the coefficients change more rapidly as a function of tone, one can use piecewise linear interpolation. Here, linear interpolation between the first two Cartesian matrices is used for the first D tones, then linear interpolation between the second and third Cartesian matrices is used for the second group of D tones, and so on.

The forgoing methods of interpolation can work well enough if the channels are sufficiently slow varying. However, there are cases where these methods do not work well enough. In general, it is the case in topologies where the group delay (or travel time) of the crosstalk signal from DSLAM to CPE is different from the group delay of the direct signal from DSLAM to the CPE. For example, there are certain topologies in which the direct signal can travel from point A to point B over a first twisted pair, and in which the signal generating the crosstalk can travel from point A to point B over a second twisted pair of very different length than the first pair. The difference in path lengths leads to crosstalk channels whose phase changes rapidly from tone to tone. Using linear interpolation over Cartesian coordinates would lead to large interpolation errors on such channels, and thus poor crosstalk mitigation performances.

The following documents, which might be useful for understanding the invention and its relationship to the prior art, are hereby acknowledged, and the relevant background art disclosed therein is briefly discussed.

The International patent application entitled "System and Method for Digital Subscriber Loop Crosstalk Cancellation" published on July 1, 2010 with publication number WO 2010/075559, discloses a method for crosstalk cancellation. The method includes generating estimated crosstalk cancellation matrices for each frequency bin of a group of adjacent frequency bins, wherein each estimated crosstalk cancellation matrix provides an estimation of a crosstalk cancellation that is expected to mitigate crosstalk that is generated at a single frequency bin by an array of transmitters that transmit information over different copper pairs that form a bonded digital subscriber line link. The method further includes generating a group crosstalk cancellation matrix based on the estimated crosstalk cancellation matrices, wherein a size of the group crosstalk cancellation matrix is smaller that an aggregate size of the estimated crosstalk cancellation matrices; and cancelling crosstalk for each frequency bin of the group by utilizing the group crosstalk cancellation matrix.

The European patent application entitled "Method and Apparatus for Signal Precoding in Communication systems" published on May 6, 2009 with publication number EP 2056548, discloses a method for jointly processing a plurality of signals to be transmitted over, or received from, respective ones of a plurality of transmission channels. The method comprises initializing a virtual channel matrix based on interferences as measured between the plurality of transmission channels, and jointly processing the plurality of signals through the virtual channel matrix. The method further comprises arranging the plurality of transmission channels into groups of transmission channels characterized by low inter-group interferences, and restricting the initialization of the virtual channel matrix to intra-group interferences as measured within the respective groups of transmission channels.

The interfering Euro-PCT patent application EP 2215739 entitled "*interpolation Method and Apparatus for Increasing Efficiency of Crosstalk Estimation*" published in May 7, 2009 as an international application with publication number WO 2009/058306, and claiming priority of the US Patent application filed in November 2, 2007 with application number 11/934347, discloses techniques for efficiently obtaining channel crosstalk estimates in DSL systems and other communication systems. A first set of estimated measures of crosstalk is obtained for a first portion of a plurality of communication channels over which data signals are to be transmitted from a transmitter to a plurality of receivers, and a second set of estimated measures of crosstalk are interpolated for a second portion of the plurality of communication channels based on the first set of estimated measures of crosstalk. The first portion of the plurality of communication channels may be a subset of the plurality of communication channels and the second portion of the plurality of communication channels is a remainder of the plurality of communication channels. Interpolation can be performed in the polar domain with linear interpolation of the phase and piecewise constant interpolation of the amplitude.

## Summary of the Invention

It is an object of the present invention to improve interpolation of crosstalk coefficients for those specific loop plants that exhibit high differential group delay. It is a further object of the present invention to lessen the memory requirements for joint signal processing.

In accordance with a first aspect of the invention, a method for initializing or updating a crosstalk mitigation matrix from sub-sampled crosstalk measurements available at a restricted set of frequency indexes comprises the steps of:

- determining a plurality of complex coupling coefficients from a disturber line into a victim line at respective ones of a plurality of frequency indexes out of said restricted set of frequency indexes,
- determining a further complex coupling coefficient from said disturber line into said victim line at a further frequency index by first converting said plurality of complex coupling coefficients into the polar domain, and by interpolating or extrapolating in the polar domain said further complex coupling coefficient following a spiral shaped curve in the complex plane whose radius is a continuous monotonic function of the angle, and
- initializing or updating said crosstalk mitigation matrix from said further interpolated or extrapolated complex coupling coefficient.

The basic idea is that the plurality of available coupling coefficients from the victim line into the disturber line are first expressed in polar coordinates, although vectoring operations are typically performed in the Cartesian domain as vectoring implies both addition and multiplication operations between complex quantized numbers.

Next, the phase (or argument) and amplitude (or radius) of the coupling coefficients are interpolated or extrapolated both together so as to determine the missing coupling coefficients, thereby yielding a spiral shaped curve in the complex plane, that is to say a curve that winds around a fixed center point at a monotonically increasing or decreasing distance from the center point.

For channels that vary slowly with frequency, the choice of the interpolation domain does not make much difference to interpolation performance. However, for special loops with high differential group delay, interpolation in the polar domain is much more effective than other techniques, primarily because the rapid phase rotation shows up as a strong linear trend in the phase component, while in the Cartesian domain it shows up approximately as a decaying or increasing sinusoidal oscillation of the real and imaginary parts.

In one embodiment of the invention, said method further comprises the steps of:

- storing said plurality of complex coupling coefficients into a local data repository, and
- interpolating or extrapolating in the polar domain said further complex coupling coefficient from said plurality of complex coupling coefficients.

In this embodiment, the phase and amplitude of the further complex coupling coefficient are interpolated or extrapolated from the respective phase and amplitude samples available at the restricted set of frequencies. Yet, and so as to relax the memory requirements, a further decimation step may be carried out over the restricted set of frequency indexes. The decimation factor is chosen so as to achieve both good interpolation performances and high memory savings.

Preferably, the phase is determined by means of linear or quadratic interpolation, whereas the amplitude is determined by means of linear or exponential interpolation. The choice of interpolation yields different spiral shapes. For instance, linear-interpolation of both the phase and amplitude yields a plurality of continuous spiral arcs connecting respective ones of the plurality of complex coupling coefficients.

In one embodiment of the invention, said method further comprises the steps of:

- determining a parameter characterizing said spiral curve,
- storing said parameter into a local data repository, and
- interpolating or extrapolating in the polar domain said further complex coupling coefficient from said parameter.

Formally, a spiral is typically described using polar coordinates, where the radius R is a continuous monotonic and parametric function of the angle $\theta$. There are different mathematical models of a spiral, such as the Archimedean spiral ($R = a + b\theta$), the logarithmic spiral ($R = a.e^{b\theta}$), the hyperbolic spiral ($R = a/\theta$), etc.

The spiral model and the corresponding set of spiral parameters (e.g., the real numbers a and b for the Archimedean spiral) can be advantageously stored in a local data repository so as to compute the coupling coefficients used for crosstalk mitigation. This will save a substantial amount of storage memory while achieving good interpolation performances.

The same parameters may apply over the whole applicable frequency range, thereby resulting in very few parameters to store.

Alternatively, the spiral parameters may vary with frequency, for instance a first set of parameters over a first frequency range, and another set of parameters over another frequency range, thereby improving interpolation performances at the expense of the memory requirements.

The choice of the spiral parameters over the respective frequency ranges may be such that the resulting spiral curve include break junctions whereat the first order derivative is discontinuous, or may include smooth junctions whereat the first order derivative is continuous.

The spiral parameters may be chosen such that the spiral curve contains the plurality of available complex coupling coefficients.

Alternatively, the spiral curve may be determined using best fitting methods, and therefore may intersect part or none of the plurality of available complex coupling coefficients.

In one embodiment of the invention, said plurality of complex coupling coefficients and said further complex coefficient are complex coupling coefficients of a crosstalk channel from said disturber line into said victim line at respective frequency indexes.

Interpolation according to the present invention can be performed on the crosstalk coefficients upfront, the precoding or post-processing coefficients being computed from the interpolated crosstalk coefficients, typically by means of matrix inversion.

In an alternative embodiment of the invention, said plurality of complex coupling coefficients and said further complex coefficient are complex coupling coefficients of said crosstalk mitigation matrix for mitigating crosstalk from said disturber line into said victim line at respective frequency indexes.

The computation of the precoding or post-processing coefficients can be confined to the restricted set of frequency indexes, and interpolation according to the present invention performed for the missing precoding or post-processing coefficients, thereby saving substantial processing power as channel matrix inversion is a rather processor-demanding task.

In accordance with another aspect of the invention, a vectoring controller for initializing or updating a crosstalk mitigation matrix from sub-sampled crosstalk measurements available at a restricted set of frequency indexes is configured to determine a plurality of complex coupling coefficients from a disturber line into a victim line at respective ones of a plurality of frequency indexes out of said restricted set of frequency indexes. The vectoring controller is further configured to determine a further complex coupling coefficient from said disturber line into said victim line at a further frequency index by first converting said plurality of complex coupling coefficients into the polar domain, and by interpolating or extrapolating in the polar domain said further complex coupling coefficient following a spiral shaped curve in the complex plane whose radius is a continuous monotonic function of the angle. The vectoring controller is further configured to initialize or update said crosstalk mitigation matrix from said further interpolated or extrapolated complex coupling coefficient.

Embodiments of a vectoring controller according to the invention correspond with the embodiments of a method according to the invention.

The vectoring controller typically forms part of an access node providing broadband communication services to subscribers through transmission lines. The access node further accommodates a signal processor for mitigating crosstalk between the transmission lines by jointly processing, through the so-updated crosstalk mitigation matrix, complex frequency samples of signals to be transmitted over, or received from, the respective transmission lines.

For instance, such an access node is a DSLAM operable at a central location, for instance at a Central Office (CO), or at a remote location closer to subscriber premises, for instance in a street cabinet. The access node may also refer to a multiplexer, an Ethernet bridge, an Internet Protocol (IP) router, etc.

**Brief Description of the Drawings**

The above and other objects and features of the invention will become more apparent and the invention itself will be best understood by referring to the following description of an embodiment taken in conjunction with the accompanying drawings wherein:

- fig. 1 represents an access node according to the invention,
- fig. 2 represents a plot of the crosstalk coefficients in the complex plane for loop plants that exhibit high differential group delay.

**Detailed Description of the Invention**

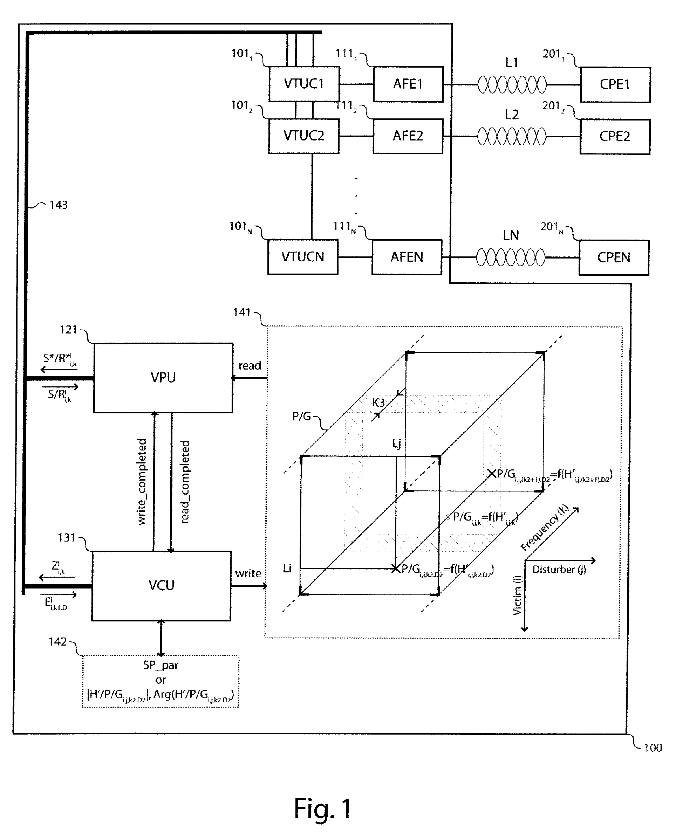

There is seen in fig. 1 a DSLAM 100 comprising the following functional blocks:

- N DSL transceiver units $101_1$ to $101_N$ (or VTUC1 to VTUCN),
- N Analog Front End (AFE) units $111_1$ to $111_N$ (or AFE1 to AFEN)
- a Vectoring Processing Unit (VPU) 121,
- a Vectoring Control Unit (VCU) 131 for controlling the operation of the VPU 111, and
- first and second local data repositories 141 and 142 configured to hold pieces of data for further retrieval.

The N transceiver units 101 are coupled to respective ones of the N AFE units 111. The transceiver units 101 are further coupled to both the VPU 121 and the VCU 131 through a high-speed communication bus 143. The VPU 121 is coupled to the first local data repository 141. The VCU 131 is coupled to both the first and second local data repositories 141 and 142.

The AFE units $111_1$ to $111_N$ are coupled to remote CPEs $201_1$ to $201_N$ via Unshielded Twisted Pair (UTC) L1 to LN respectively.

The VPU 121 and the VCU 131 and associated data repositories can be co-located with the transceiver units 101 on a single Line Termination (LT) board for board level vectoring, or can form part of a dedicated Printed Board Assembly (PBA) for system level vectoring.

The transceiver units 101 are arranged to operate both a downstream and an upstream DSL communication channel.

Basically, a transceiver unit comprises a transmitter for encoding, modulating and shaping a DSL downstream signal for further transmission over a transmission line, and a receiver for demodulating, detecting and decoding a DSL upstream signal from a transmission line.

The AFE 111 comprises a Digital to Analog Converter (DAC) and an Analog to Digital Converter (ADC), a line driver for driving the transmit signal and a Low Noise Amplifier (LNA) for amplifying the receive signal, an hybrid circuit for coupling the transmitter output to the transmission line and the transmission line to the receiver input while achieving low transmitter-receiver coupling, transmit-filter and receive-filter circuitry, impedance-matching circuitry and isolation circuitry.

The subscriber lines L1 to LN are bundled in a cable binder 301 together with further subscriber lines, and induce crosstalk into each other as they are in close vicinity over whole or part of their length. The subscriber lines L1 to LN are assumed to form part of the same vectoring group.

For DSL deployment, crosstalk mostly reduces to Far-End Crosstalk (FEXT): some substantial amount of the signal transmitted by a transceiver unit (the disturber) couples into a neighboring line and impairs reception of the direct signal transmitted over that neighboring line at a remote transceiver unit (the victim). For instance, the downstream signal transmitted by the transceiver unit $101_1$ over line L1 couples into line L2 and is detected as noise by CPE $201_2$. Also, the upstream signal transmitted by CPE $201_2$ over line L2 couples into line L1 and is detected as noise by the transceiver unit $101_1$.

The transceiver units 101 are further configured to supply transmit frequency-domain samples to the VPU 121 before Inverse Fast Fourier Transform (IFFT) step for joint signal precoding, and to supply receive frequency-domain samples to the VPU 121 after Fast Fourier Transform (FFT) step for joint signal post-processing.

The transceiver units 101 are further configured to receive corrected frequency-domain samples from the VPU 121 for further transmission or detection. Alternatively, the transceiver units may receive correction samples to add to the initial frequency-domain samples before further transmission or detection.

The transmit and receive frequency-domain samples supplied by the transceiver units 101 are expressed in Cartesian coordinates, and so are the corrected frequency-domain samples returned by the VPU 121.

The VPU 121 is configured to mitigate the crosstalk induced over the transmission lines L1 to LN. This is achieved by multiplying a vector **S** of transmit frequency-domain samples with a precoding matrix **P** so to compensate for an estimate of the coming crosstalk (downstream), or by multiplying a vector **R** of receive frequency-domain samples with a crosstalk cancellation matrix **G** so as to cancel an estimate of the incurred crosstalk (upstream). The precoding matrix **P** and the crosstalk cancellation matrix **G** are also expressed in Cartesian coordinates.

Let i denotes a line index ranging from 1 to N, k a frequency index ranging from 0 to K-1, and 1 a Discrete Multi-Tone (DMT) symbol index.

Let $S^1_{i,k}$ and $S*^1_{i,k}$ denote the transmit frequency-domain samples transmitted over line Li during DMT symbol 1 before and after crosstalk pre-compensation by the VPU 121 respectively.

Similarly, let $R^1_{i,k}$ and $R*^1_{i,k}$ denote the receive frequency-domain samples received from line Li during DMT symbol 1 before and after crosstalk cancellation respectively.

We have:

$$\mathbf{S}*^1_k = \begin{bmatrix} S*^1_{1,k} \\ S*^1_{2,k} \\ \vdots \\ S*^1_{N,k} \end{bmatrix} = \mathbf{P}_k \cdot \mathbf{S}^1_k = \begin{bmatrix} 1 & P_{1,2,k} & \cdots & P_{1,N,k} \\ P_{2,1,k} & 1 & & \vdots \\ \vdots & & & P_{N-1,N,k} \\ P_{N,1,k} & \cdots & P_{N,N-1,k} & 1 \end{bmatrix} \cdot \begin{bmatrix} S^1_{1,k} \\ S^1_{2,k} \\ \vdots \\ S^1_{N,k} \end{bmatrix} \quad (2),$$

and

$$\mathbf{R}*^1_k = \begin{bmatrix} R*^1_{1,k} \\ R*^1_{2,k} \\ \vdots \\ R*^1_{N,k} \end{bmatrix} = \mathbf{G}_k \cdot \mathbf{R}^1_k = \begin{bmatrix} 1 & G_{1,2,k} & \cdots & G_{1,N,k} \\ G_{2,1,k} & 1 & & \vdots \\ \vdots & & & G_{N-1,N,k} \\ G_{N,1,k} & \cdots & G_{N,N-1,k} & 1 \end{bmatrix} \cdot \begin{bmatrix} R^1_{1,k} \\ R^1_{2,k} \\ \vdots \\ R^1_{N,k} \end{bmatrix} \quad (3).$$

In the crosstalk mitigation matrix **P** or **G**, a row i represents a particular victim line Li, while a column j represents a particular disturber line Lj. At the intersection, the coupling coefficient that should be applied to the corresponding disturber transmit or receive frequency-domain sample for mitigating over the victim line Li the crosstalk from the disturber line Lj. Not all the coefficients of the matrix need to be determined, for instance on account of limited vectoring capabilities first assigned to the strongest crosstalkers, or still for instance due to the fact that some lines do not noticeably interact with each other. The undetermined coefficients are preferably set to 0.

The VCU 131 is basically for controlling the operation of the VPU 121, and more specifically for initializing or updating the precoding matrix **P** and the cancellation matrix **G**.

The VCU 131 starts first by configuring the respective downstream and upstream pilot sequences to be used over the lines L1 to LN. The pilot sequences are mutually orthogonal pilot sequences of length L. The pilot sequence transmitted over line Li at frequency index k is denoted as $Z_{i,k}$ and comprises L pilot digits $\left\{Z^l_{i,k}\right\}$ to be transmitted over L SYNC symbols.

The VCU 131 gathers respective slicer errors as measured during the detection of the SYNC symbols by the remote CPEs 201 for downstream communication, and by the transceiver units 101 for upstream communication. The equalized interference measurements carried out over a victim line Li at frequency index k during SYNC symbol index 1 are denoted as $E^l_{i,k}$. The frequency error samples $E^l_{i,k}$ are also expressed in Cartesian coordinates.

In order to reduce the amount of error feedback information, interference measurements are only available at frequency indexes k1.D1, wherein D1 denotes a first decimation factor, and k1 denotes a further frequency index ranging from 0 to K/D1-1.

Next, the VCU 131 correlates the interference measurements $E^l_{i,k1.D1}$ as measured over the victim line Li with the respective pilot sequence transmitted over the disturber line Lj so as to obtain an estimate of the equalized crosstalk coefficients $H'_{i,j,k1.D1}$ from line Lj into line Li at frequency indexes k1.D1, wherein:

$$H'_{i,j,k1.D1}=\frac{H_{i,j,k1.D1}}{H_{i,i,k1.D1}} \quad (4)$$

A further decimation step is carried out so as to retain only the crosstalk samples that are necessary to achieve a good balance between interpolation performance and memory savings. The further decimated crosstalk coefficients are denoted as $H'_{i,j,k2.D2}$, wherein D2 denotes a second decimation factor that is a multiple of D1, and k2 denotes a further frequency index ranging from 0 to K/D2 -1. This further decimation step is optional.

Finally, the equalized crosstalk coefficients are converted into the polar domain:

$$H'_{i,j,k2.D2}=R_{i,j,k2.D2}e^{j\cdot\theta_{i,j,k2.D2}} \quad (5),$$

wherein $R_{i,j,k2.D2}$ and $\theta_{i,j,k2.D2}$ denote the amplitude and phase of the equalized crosstalk coefficients respectively.

The polar coordinates $R_{i,j,k2.D2}$ and $\theta_{i,j,k2.D2}$ are stored in the second data repository 142.

The missing crosstalk coefficients at intermediary frequency indexes are determined by interpolating both the amplitude and the phase from $R_{i,j,k2.D2}$ and $\theta_{i,j,k2.D2}$ samples respectively.

Preferably, the VCU 131 uses linear or quadratic interpolation for the phase, and linear or exponential interpolation for the amplitude.

With linear interpolation, the phase and the amplitude of the equalized crosstalk coefficients can be written as:

$$\theta_{i,j,k}=\frac{\theta_{i,j,(k2+1).D2}-\theta_{i,j,k2.D2}}{D2}\cdot(k-k2.D2)+\theta_{i,j,k2.D2} \quad (6),$$

and

$$R_{i,j,k}=\frac{R_{i,j,(k2+1).D2}-R_{i,j,k2.D2}}{D2}\cdot(k-k2.D2)+R_{i,j,k2.D2} \quad (7),$$

with k2.D2 < k < (k2+1).D2.

With exponential interpolation, the amplitude of the equalized crosstalk coefficients can be written as:

$$R_{i,j,k}=R_{i,j,k2.D2}\cdot\left(\left(\frac{R_{i,j,(k2+1).D2}}{R_{i,j,k2.D2}}\right)^{1/D2}\right)^{(k-k2.D2)} \quad (8),$$

with k2.D2 < k < (k2+1).D2.

The VCU 131 can now proceed with the computation of the precoding matrix **P** and crosstalk cancellation matrix **G** from the so-interpolated crosstalk coefficients. The VCU 131 can use a first-order matrix inversion to compute the coefficients of the precoding matrix **P** and crosstalk cancellation matrix **G,** or any other suitable method (see $P/G_{i, j, k} = f(H'_{i, j, k})$ and alike in fig. 1). The precoding matrix **P** and crosstalk cancellation matrix **G** are converted back in Cartesian coordinates and stored in the first data repository 141 for use by the VPU 121.

In a further advantageous embodiment, the VPU 121 is further configured to process K3 frequency-domain samples for crosstalk mitigation at once. The first data repository 141 is then dimensioned to hold $K3.N^2$ coefficients only, and the VCU 131 is further configured to update on the fly the first data repository 141 with the next $K3.N^2$ coefficients by means of the aforementioned polar interpolation whenever joint signal processing of the previous $K3. N^2$ transmit or receive frequency-domain samples is completed. Signals need to exchanged between the VPU 121 and the VCU 131 for synchronizing the write operation of the VCU 131 into the data repository 141 and the read operation of the VPU 121 from the data repository 141 (see write_completed and read_completed signals in fig. 1 exchanged between the VPU 121 and the VCU 131).

This embodiment reduces drastically the memory requirements for signal vectoring.

In an alternative embodiment, the coefficients of precoding matrix **P** and the crosstalk cancellation matrix **G** are computed at frequency indexes k2.D2 from the equalized crosstalk coefficients $H'_{i, j, k2.D2}$. The matrix coefficients $P_{i, j, k2.D2}$ and $G_{i, j, k2.D2}$ are next converted into the polar domain and stored into the second data repository 142. The phase and amplitude of the missing matrix coefficients are directly interpolated from the phase and amplitude of the matrix coefficients $P_{i, j, k2.D2}$ and $G_{i, j, k2.D2}$. The VCU 131 may use linear or quadratic interpolation for determining the phase of the missing matrix coefficients, and linear or exponential interpolation for determining the amplitude of the missing matrix coefficients.

In still an alternative embodiment, the parameters of an Archimedean spiral ($R = a + b\theta$) or a logarithmic/exponential spiral ($R = e^{b\theta}$) are stored in the second data repository 142 (see SP_par in fig. 1) and substitutes for the crosstalk coefficients $H'_{i, j, k2.D2}$ or for the matrix coefficients $P_{i, j, k2.D2}$ and $G_{i, j, k2.D2}$.

The spiral model and spiral parameters are selected so as to fulfill a best-fitting criteria (e.g., minimum square distance) with respect to the crosstalk coefficients $H'_{i, j, k2.D2}$, or with respect to the matrix coefficients $P_{i, j, k2.D2}$ and $G_{i, j, k2.D2}$, whichever embodiment being applicable. All the equalized crosstalk coefficients $H'_{i, j, k}$, or all the matrix coefficients $P_{i, j, k}$ and $G_{i, j, k}$, are computed on the fly by means of the spiral formula that typically expresses R as a function of $\theta$, and $\theta$ as a linear function of k.

This embodiment is particularly advantageous as only very few parameters need to be stored in the second data repository 142 for computing on the fly the precoding or crosstalk cancellation matrix.

In still an alternative embodiment, different spiral parameters and/or spiral models are used over different frequency ranges, thereby improving interpolation performances at the expense of the memory requirements.

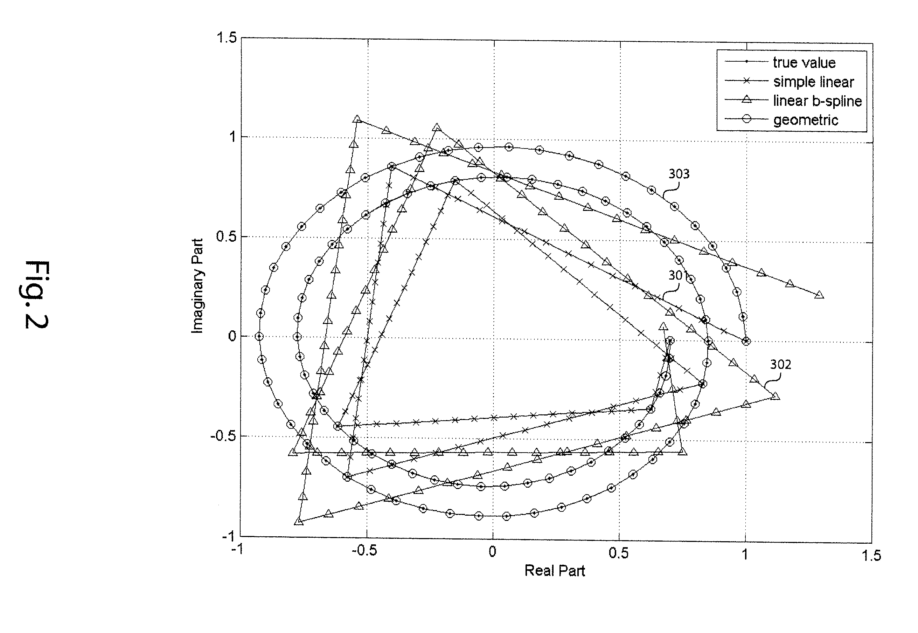

The results of polar interpolation are compared with the results of Cartesian interpolation in fig. 2. The true, optimal coefficient values are marked with circles. The coefficients are plotted in the complex plane and form a spiral shape curve, that is to say a slowly varying amplitude and a steady rotation around the origin. Using two types of piecewise linear interpolation in the Cartesian domain, and 16 as decimation factor, one obtains the curve 301 and 302 respectively (see legends "simple linear" and "linear b-spline" respectively). As can be seen, these methods are unable to closely represent the desired coefficients with such a high decimation. Using piecewise linear interpolation in the polar domain, and still 16 as decimation factor, results in the spiral curve 303 (see legend "geometric"). When the channel has high differential group delay, the polar interpolation is much more accurate.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1.  **A method** for initializing or updating **a crosstalk mitigation matrix** (P/G) from **sub-sampled crosstalk measurements** ( $E^1_{i,k1.D1}$ ) available at **a restricted set of frequency indexes** (k1.D1), and comprising the steps of:

    - determining **a plurality of complex coupling coefficients** (H'/P/G$_{i, j, k2.D2}$) from **a disturber line** (Lj) into **a victim line** (Li) at respective ones of a **plurality of frequency indexes** (k2.D2) out of said restricted set of frequency indexes,
    - determining **a further complex coupling coefficient** (H'/P/G$_{i, j, k}$) from said disturber line into said victim line at **a further frequency index** (k) by first converting said plurality of complex coupling coefficients into the polar domain, and by interpolating or extrapolating in the polar domain said further complex coupling coefficient following **a spiral shaped curve** (303) in the complex plane whose radius is a continuous monotonic function of the angle, and
    - initializing or updating said crosstalk mitigation matrix from said further interpolated or extrapolated complex coupling coefficient.

2.  **A method** according to claim 1, *wherein* said method further comprises the steps of:

    - storing said plurality of complex coupling coefficients into **a local data repository** (142), and
    - interpolating or extrapolating in the polar domain said further complex coupling coefficient from said plurality of complex coupling coefficients.

3.  **A method** according to claim 1, *wherein* said method further comprises the steps of:

    - determining **a parameter** (SP_par) characterizing said spiral curve,
    - storing said parameter into **a local data repository** (142), and
    - interpolating or extrapolating in the polar domain said further complex coupling coefficient from said parameter.

4.  **A method** according to claim 3, *wherein* said parameter is frequency-dependent.

5.  **A method** according any of claims 1 to 4, *wherein* said plurality of complex coupling coefficients and said further complex coefficient are complex coupling coefficients of **a crosstalk channel** from said disturber line into said victim line at respective frequency indexes.

6.  **A method** according to any of claims 1 to 4, *wherein* said plurality of complex coupling coefficients and said further complex coefficient are complex coupling coefficients of said crosstalk mitigation matrix for mitigating crosstalk from said disturber line into said victim line at respective frequency indexes.

7.  **A vectoring controller** (131) for initializing or updating **a crosstalk mitigation matrix** (P/G) from **sub-sampled crosstalk measurements** ( $E^1_{i,k1.D1}$ ) available at **a restricted set of frequency indexes** (k1.D1), and configured to determine **a plurality of complex coupling coefficients** (H'/P/G$_{i, j, k2.D2}$) from **a disturber line** (Lj) into **a victim line** (Li) at respective ones of a **plurality of frequency indexes** (k2.D2) out of said restricted set of frequency indexes,
    *wherein* said vectoring controller is further configured to determine **a further complex coupling coefficient** (H'/P/Gi, j, k) from said disturber line into said victim line at **a further frequency index** (k) by first converting said plurality of complex coupling coefficients into the polar domain, and by interpolating or extrapolating in the polar domain said further complex coupling coefficient following **a spiral shaped curve** (303) in the complex plane whose radius is a continuous monotonic function of the angle,
*and wherein* said vectoring controller is further configured to initialize or update said crosstalk mitigation matrix from said further interpolated or extrapolated complex coupling coefficient.

8. **A vectoring controller** (131) according to claim 7, *wherein* said vectoring controller is further configured to store said plurality of complex coupling coefficients into **a local data repository** (142), and to interpolate or extrapolate in the polar domain said further complex coupling coefficient from said plurality of complex coupling coefficients.

9. **A vectoring controller** (131) according to claim 7, *wherein* said vectoring controller is further configured to determine **a parameter** (SP_par) characterizing said spiral curve, to store said parameter into **a local data repository** (142), and to interpolate or extrapolate in the polar domain said further complex coupling coefficient from said parameter.

10. **A vectoring controller** (131) according to claim 9, *wherein* said parameter is frequency-dependent.

11. **A vectoring controller** (131) according any of claims 7 to 10, *wherein* said plurality of complex coupling coefficients and said further complex coefficient are complex coupling coefficients of **a crosstalk channel** from said disturber line into said victim line at respective frequency indexes.

12. **A vectoring controller** (131) according to any of claims 7 to 10, *wherein* said plurality of complex coupling coefficients and said further complex coupling coefficients are complex coupling coefficients of said crosstalk mitigation matrix for mitigating crosstalk from said disturber line into said victim line at respective frequency indexes.

13. **An access node** (100) comprising **a vectoring controller** (131) according to any of claims 7 to 12.

14. **An access node** (100) according to claim 13, wherein said access node is **a Digital subscriber Line Access Multiplexer DSLAM** operable at a central location or at a remote location closer to subscriber premises.

**Patentansprüche**

1. **Verfahren** zum Initialisieren oder Aktualisieren einer **Nebensprechverringerungsmatrix** (P/G) von als **Teilprobe genommenen Nebensprechmessungen** $\left( E_{i,\ k1.D1}^1 \right)$ die bei einem **begrenzten Satz von Frequenzindizes** (k1.D1) verfügbar sind, und folgende Schritte umfassend:

   - Bestimmen **einer Vielzahl von komplexen Kopplungskoeffizienten** (H'/P/G$_{i, j, k2.D2}$) von **einer Störleitung** (Lj) in **einer Opferleitung** (Li) an jeweiligen **einer Vielzahl von Frequenzindizes** (k2.D2) aus dem besagten begrenzten Satz von Frequenzindizes,
   - Bestimmen **eines weiteren komplexen Kopplungskoeffizienten** (H'P/G$_{i, j, k}$) von der besagten Störleitung in der besagten Opferleitung an **einem weiteren Frequenzindex** (k) durch erstens Konvertieren der besagten Vielzahl von komplexen Kopplungskoeffizienten in die Polardomäne und durch Interpolieren oder Extrapolieren des besagten weiteren komplexen Kopplungskoeffizienten in der Polardomäne gemäß **einer spiralförmigen Kurve** (303) in der komplexen Ebene, deren Radius eine stetige monotone Funktion des Winkels ist, und
   - Initialisieren oder Aktualisieren der besagten Nebensprechverringerungsmatrix von dem besagten weiteren interpolierten oder extrapolierten komplexen Kopplungskoeffizienten.

2. **Verfahren** nach Anspruch 1, wobei das besagte Verfahren weiterhin folgende Schritte umfasst:

   - Speichern der besagten Vielzahl von komplexen Kopplungskoeffizienten in **einem lokalen Datenbehälter** (142), und
   - Interpolieren oder Extrapolieren des besagten weiteren komplexen Kopplungskoeffizienten in der Polardomäne von der besagten Vielzahl von komplexen Kopplungskoeffizienten.

3. **Verfahren** nach Anspruch 1, *wobei* das besagte Verfahren weiterhin folgende Schritte umfasst:

   - Bestimmen **eines Parameters** (SP_par), der die besagte spiralförmige Kurve kennzeichnet,
   - Speichern des besagten Parameters in **einem lokalen Datenbehälter** (142), und

- Interpolieren oder Extrapolieren des besagten weiteren komplexen Kopplungskoeffizienten in der Polardomäne von dem besagten Parameter.

4. **Verfahren** nach Anspruch 3, *wobei* der besagte Parameter frequenzabhängig ist.

5. **Verfahren** nach einem beliebigen der Ansprüche 1 bis 4, *wobei* die besagte Vielzahl von komplexen Kopplungskoeffizienten und der besagte weitere komplexe Koeffizient komplexe Kopplungskoeffizienten **eines Nebensprechkanals** von der besagten Störleitung in der besagten Opferleitung an jeweiligen Frequenzindizes sind.

6. **Verfahren** nach einem beliebigen der Ansprüche 1 bis 4, *wobei* die besagte Vielzahl von komplexen Kopplungskoeffizienten und der besagte weitere komplexe Koeffizient komplexe Kopplungskoeffizienten von der besagten Nebensprechverringerungsmatrix zum Verringern des Nebensprechens von der besagten Störleitung in der besagten Opferleitung an jeweiligen Frequenzindizes sind.

7. **Vectoring-Controller** (131) zum Initialisieren oder Aktualisieren **einer Nebensprechverringerungsmatrix** (P/G) von **als Teilprobe genommenen Nebensprechmessungen** $\left( E^{1}_{i,\ k1.D1} \right)$, die bei **einem begrenzten Satz von Frequenzindizes** (k1.D1) verfügbar sind, und dafür ausgelegt, **eine Vielzahl von komplexen Kopplungskoeffizienten** (H'/P/G$_{i, j, k2.D2}$) von **einer Störleitung** (Lj) in einer Opferleitung (Li) an jeweiligen **einer Vielzahl von Frequenzindizes** (k2.D2) aus dem besagten begrenzten Satz von Frequenzindizes zu bestimmen,
*wobei* der besagte Vectoring-Controller weiterhin dafür ausgelegt ist, einen **weiteren komplexen Kopplungskoeffizienten** (H'/P/G$_{i, j, k}$) von der besagten Störleitung in der besagten Opferleitung an **einem weiteren Frequenzindex** (k) durch erstens Konvertieren der besagten Vielzahl von komplexen Kopplungskoeffizienten in die Polardomäne und durch Interpolieren oder Extrapolieren des besagten weiteren komplexen Kopplungskoeffizienten in der Polardomäne gemäß **einer spiralförmigen Kurve** (303) in der komplexen Ebene, deren Radius eine stetige monotone Funktion des Winkels ist, zu bestimmen,
*und wobei* der besagte Vectoring-Controller weiterhin dafür ausgelegt ist, die besagte Nebensprechverringerungsmatrix von dem besagten weiteren interpolierten oder extrapolierten komplexen Kopplungskoeffizienten zu initialisieren oder aktualisieren.

8. **Vectoring-Controller** (131) nach Anspruch 7, *wobei* der Vectoring-Controller weiterhin dafür ausgelegt ist, die besagte Vielzahl von komplexen Kopplungskoeffizienten in **einem lokalen Datenbehälter** (142) zu speichern, und den besagten weiteren komplexen Kopplungskoeffizienten in der Polardomäne von der besagten Vielzahl von komplexen Kopplungskoeffizienten zu interpolieren oder extrapolieren.

9. **Vectoring-Controller** (131) nach Anspruch 7, *wobei* der Vectoring-Controller weiterhin dafür ausgelegt ist, **einen Parameter** (SP_par), der die besagte spiralförmige Kurve kennzeichnet, zu bestimmen, und den besagten Parameter in einem **lokalen Datenbehälter** (142) zu speichern, und den besagten weiteren komplexen Kopplungskoeffizienten in der Polardomäne von dem besagten Parameter zu interpolieren oder extrapolieren.

10. **Vectoring-Controller** (131) nach Anspruch 9, *wobei* der besagte Parameter frequenzabhängig ist.

11. **Vectoring-Controller** (131) nach einem beliebigen der Ansprüche 7 bis 10, *wobei* die besagte Vielzahl von komplexen Kopplungskoeffizienten und der besagte weitere komplexe Koeffizient komplexe Kopplungskoeffizienten **eines Nebensprechkanals** von der besagten Störleitung in der besagten Opferleitung an jeweiligen Frequenzindizes sind.

12. **Vectoring-Controller** (131) nach einem beliebigen der Ansprüche 7 bis 10, *wobei* die besagte Vielzahl von komplexen Kopplungskoeffizienten und die besagten weiteren komplexen Kopplungskoeffizienten komplexe Kopplungskoeffizienten von der besagten Nebensprechverringerungsmatrix zum Verringern des Nebensprechens von der besagten Störleitung in der besagten Opferleitung an jeweiligen Frequenzindizes sind.

13. **Zugangsknoten** (100), umfassend **einen Vectoring-Controller** (131) nach einem beliebigen der Ansprüche 7 bis 12.

14. **Zugangsknoten** (100) nach Anspruch 13, wobei der besagte Zugangsknoten **ein digitaler Teilnehmeranschlusszugangsmultiplexer DSLAM** ist, der an einer zentralen Stelle oder an einer fernen Stelle, die den Räumlichkeiten des Teilnehmers näher ist, betreibbar ist.

**Revendications**

1. **Procédé** pour initialiser ou mettre à jour une **matrice d'atténuation de la diaphonie** (P/G) à partir de **mesures de diaphonie sous-échantillonnées** $(E^1_{i,,k1.D1})$ disponibles à **un ensemble limité d'indices de fréquence** (k1.D1), et comprenant les étapes suivantes :

   - déterminer **une pluralité de coefficients de couplage complexes** (H'/P/G$_{i,j,k2.D2}$) à partir **d'une ligne perturbatrice** (Lj) dans **une ligne victime** (Li) à des indices respectifs **d'une pluralité d'indices de fréquence** (k2.D2) parmi ledit ensemble limité d'indices de fréquence,
   - déterminer **un coefficient de couplage complexe supplémentaire** (H'/P/G$_{i,j,k}$) à partir de ladite ligne perturbatrice dans ladite ligne victime à **un indice de fréquence supplémentaire** (k) en convertissant d'abord ladite pluralité de coefficients de couplage complexes dans le domaine polaire, puis en interpolant ou en extrapolant dans le domaine polaire ledit coefficient de couplage complexe supplémentaire selon **une courbe en forme de spirale** (303) dans le plan complexe dont le rayon est une fonction monotone continue de l'angle, et
   - initialiser ou mettre à jour ladite matrice d'atténuation de la diaphonie à partir dudit coefficient de couplage complexe interpolé ou extrapolé supplémentaire.

2. **Procédé** selon la revendication 1, ledit procédé comprenant en outre les étapes suivantes :

   - stocker ladite pluralité de coefficients de couplage complexes dans **un référentiel de données locales** (142), et
   - interpoler ou extrapoler dans le domaine polaire ledit coefficient de couplage complexe supplémentaire à partir de ladite pluralité de coefficients de couplage complexes.

3. **Procédé** selon la revendication 1, ledit procédé comprenant en outre les étapes suivantes :

   - déterminer **un paramètre** (sP_par) caractérisant ladite courbe en spirale,
   - stocker ledit paramètre dans **un référentiel de données locales** (142), et
   - interpoler ou extrapoler dans le domaine polaire ledit coefficient de couplage complexe supplémentaire à partir dudit paramètre.

4. **Procédé** selon la revendication 3, *dans lequel* ledit paramètre dépend de la fréquence.

5. **Procédé** selon l'une quelconque des revendications 1 à 4, *dans lequel* ladite pluralité de coefficients de couplage complexes et ledit coefficient complexe supplémentaire sont des coefficients de couplage complexes **d'un canal de diaphonie** à partir de ladite ligne perturbatrice dans ladite ligne victime à des indices de fréquence respectifs.

6. **Procédé** selon l'une quelconque des revendications 1 à 4, *dans lequel* ladite pluralité de coefficients de couplage complexes et ledit coefficient complexe supplémentaire sont des coefficients de couplage complexes de ladite matrice d'atténuation de la diaphonie pour atténuer la diaphonie à partir de ladite ligne perturbatrice dans ladite ligne victime à des indices de fréquence respectifs.

7. **Contrôleur de vectorisation** (131) pour initialiser ou mettre à jour **une matrice d'atténuation de la diaphonie** (P/G) à partir de **mesures de diaphonie sous-échantillonnées** $(E^1_{i,k1.D1})$ disponibles à **un ensemble limité d'indices de fréquence** (k1.D1), et configuré pour déterminer **une pluralité de coefficients de couplage complexes** (H'P/G$_{i,j,k2.D2}$) à partir **d'une ligne perturbatrice** (Lj) dans **une ligne victime** (Li) à des indices respectifs **d'une pluralité d'indices de fréquence** (k2.D2) parmi ledit ensemble limité d'indices de fréquence, *dans lequel* ledit contrôleur de vectorisation est en outre configuré pour déterminer **un coefficient de couplage complexe supplémentaire** (H'/P/G$_{i,j,k}$) à partir de ladite ligne perturbatrice dans ladite ligne victime à **un indice de fréquence supplémentaire** (k) en convertissant d'abord ladite pluralité de coefficients de couplage complexes dans le domaine polaire, puis en interpolant ou en extrapolant dans le domaine polaire ledit coefficient de couplage complexe supplémentaire selon **une courbe en forme de spirale** (303) dans le plan complexe dont le rayon est une fonction monotone continue de l'angle, *et dans lequel* ledit contrôleur de vectorisation est en outre configuré pour initialiser ou mettre à jour ladite matrice d'atténuation de la diaphonie à partir dudit coefficient de couplage complexe interpolé ou extrapolé supplémentaire.

8. **Contrôleur de vectorisation** (131) selon la revendication 7, *dans lequel* ledit contrôleur de vectorisation est en outre configuré pour stocker ladite pluralité de coefficients de couplage complexes dans **un référentiel de données locales** (142), et pour interpoler ou extrapoler dans le domaine polaire ledit coefficient de couplage complexe supplémentaire à partir de ladite pluralité de coefficients de couplage complexes.

9. **Contrôleur de vectorisation** (131) selon la revendication 7, *dans lequel* ledit contrôleur de vectorisation est en outre configuré pour déterminer **un paramètre** (SP_par) caractérisant ladite courbe en spirale, pour stocker ledit paramètre dans **un référentiel de données locales** (142), et pour interpoler ou extrapoler dans le domaine polaire ledit coefficient de couplage complexe supplémentaire à partir dudit paramètre.

10. **Contrôleur de vectorisation** (131) selon la revendication 9, *dans lequel* ledit paramètre dépend de la fréquence.

11. **Contrôleur de vectorisation** (131) selon l'une quelconque des revendications 7 à 10, *dans lequel* ladite pluralité de coefficients de couplage complexes et ledit coefficient complexe supplémentaire sont des coefficients de couplage complexes **d'un canal de diaphonie** à partir de ladite ligne perturbatrice dans ladite ligne victime à des indices de fréquence respectifs.

12. **Contrôleur de vectorisation** (131) selon l'une quelconque des revendications 7 à 10, *dans lequel* ladite pluralité de coefficients de couplage complexes et lesdits coefficients de couplage complexes supplémentaires sont des coefficients de couplage complexes de ladite matrice d'atténuation de la diaphonie pour atténuer la diaphonie à partir de ladite ligne perturbatrice dans ladite ligne victime à des indices de fréquence respectifs.

13. **Noeud d'accès** (100) comprenant un **contrôleur de vectorisation** (131) selon l'une quelconque des revendications 7 à 12.

14. **Noeud d'accès** (100) selon la revendication 13, dans lequel ledit noeud d'accès est **un multiplexeur d'accès de ligne d'abonné numérique DSLAM** fonctionnant à un emplacement central ou à un emplacement distant plus proche des locaux de l'abonné.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010075559 A
- EP 2056548 A
- EP 2215739 W
- WO 2009058306 A
- WO 11934347 A